# FASCICULE DE BREVET EUROPEEN

(11) **EP 3 212 582 B1**
(45) Date de publication et mention de la délivrance du brevet: **08.01.2020**
(21) Numéro de dépôt: 15788018.8
(22) Date de dépôt: 30.10.2015
(51) Int. Cl.: C02F 11/18

(54) **PROCÉDÉ ET INSTALLATION POUR L'HYDROLYSE THERMIQUE DES BOUES**
VERFAHREN UND ANLAGE ZUR THERMISCHEN HYDROLYSE VON SCHLÄMME
PROCESS AND PLANT FOR THERMAL HYDROLYSIS OF SLUDGE

(30) Priorité: 31.10.2014 FR 1460500
(43) Date de publication de la demande: 06.09.2017
(73) Titulaire: Veolia Water Solutions & Technologies Support, 94417 Saint-Maurice Cedex (FR)
(72) Inventeur: CHAUZY, Julien, F-92160 Antony (FR); DJAFER, Malik, F-92100 Boulogne-Billancourt (FR); CRAMPON, Cédric, F-94500 Champigny-sur-Marne (FR)
(74) Mandataire: Vidon Brevets & Stratégie
(86) Numéro de dépôt international: PCT/EP2015/075267
(87) Numéro de publication internationale: WO 2016/066809

(56) Documents cités:
- FR-A1- 2 820 735
- FR-A1- 3 003 558
- US-A1- 2012 111 515

## Description

### Domaine de l'invention

L'invention concerne le domaine du traitement des effluents constitués de, ou fortement chargés en, matières organiques fermentescibles et notamment celui des boues issues des processus de dépollution des eaux usées urbaines ou industrielles. Ces effluents sont ci-après désignés d'une façon générale par le terme « boues ».

### Art antérieur

Actuellement, une partie des boues produites par les stations d'épuration est valorisée dans le domaine agricole et une autre partie incinérée ou traitée d'autres manières. Toutefois, ces boues doivent de plus en plus faire l'objet d'un traitement dans des filières spécifiques.

La production de ces boues étant de plus en plus importante, il est en effet nécessaire que celles-ci ne présentent pas de danger pour l'environnement et la santé humaine. De fait, ces boues contiennent des germes dont certains sont pathogènes (bactéries conformes, salmonelles, œufs d'helminthes,...). De plus, elles sont très fermentescibles et sont à l'origine de la production de gaz (amines, sulfure d'hydrogène, mercaptans...) qui engendrent des nuisances olfactives. Ces considérations expliquent la nécessité de mettre en œuvre, sur les filières de traitement indiquées ci-dessus, au moins une étape de stabilisation de ces boues visant à obtenir des boues n'évoluant plus, ou à tout le moins, évoluant peu rapidement, tant sur le plan biologique que sur le plan physico-chimique.

Une préoccupation importante réside dans la volonté de réduire le volume de ces boues, et/ou de valoriser les boues sous forme de biogaz.

Parmi les procédés proposés dans l'état de la technique pour traiter ces boues, l'hydrolyse thermique est considérée comme un procédé particulièrement intéressant.

L'hydrolyse thermique des boues consiste à traiter celles-ci à une température élevée et sous pression de façon à les hygiéniser (c'est-à-dire à abattre très fortement leur teneur en micro-organismes notamment pathogènes), à solubiliser une partie importante des matières particulaires et à transformer la matière organique qu'elles contiennent en matière soluble facilement biodégradable (en acides gras volatils par exemple).

Une telle hydrolyse thermique des boues pourra être prévue en amont ou en aval d'une étape de digestion anaérobie. Lorsque l'hydrolyse thermique sera prévue en aval elle sera fréquemment, selon le vocable de l'homme de l'art appelée « carbonisation hydrothermale ».

Il a été proposé une technique d'hydrolyse de boues particulièrement efficace décrite dans FR2820735. Cette technique consiste à mettre en œuvre au moins deux réacteurs fonctionnant en parallèle dans chacun desquels des lots de boues subissent un cycle complet d'hydrolyse thermique.

Chacun des cycles d'hydrolyse thermique mis en œuvre dans un réacteur comprend les étapes consistant à alimenter les boues à traiter dans le réacteur, à y injecter de la vapeur de récupération (« vapeur de flash ») pour récupérer de la chaleur dans les boues, à y injecter de la vapeur vive pour les amener à une pression P et à une température T permettant l'hydrolyse, à les maintenir à cette pression P et à cette température T pendant un certain temps, à ramener les boues à une pression proche de la pression atmosphérique en libérant de la vapeur de flash qui est recyclée pour préchauffer les boues à traiter du réacteur en parallèle, et à vidanger le réacteur des boues ainsi hydrolysées.

Selon cette technique, il est prévu que le cycle soit décalé dans le temps d'un réacteur à l'autre pour utiliser la vapeur de flash produite à partir d'un réacteur pour l'injecter dans l'autre réacteur. Une telle mise en œuvre permet de profiter de la vapeur de flash produite dans un des réacteurs pour alimenter en vapeur l'autre réacteur.

Cette technique met en œuvre une alimentation en boues à traiter et une vidange des boues pouvant être continues et une hydrolyse thermique par lots de boues (« batch ») à l'aide de plusieurs réacteurs d'hydrolyse thermique.

Un tel procédé peut être mis en œuvre dans des installations simples, les étapes de remplissage, d'hydrolyse, de dépressurisation et de vidange étant effectuées dans le même réacteur. Il permet ainsi de minimiser la vitesse d'encrassage de ces installations, de minimiser les odeurs en l'absence de passage des boues d'un réacteur à l'autre, et de réduire les besoins en vapeur vive.

Toutefois, selon cette technique, l'injection de vapeur de flash est effectuée via un injecteur de vapeur dans le lit de boues du réacteur. Une telle configuration conduit à des pertes de charge importantes, d'une part dues à la configuration de l'injecteur de vapeur et d'autre part dues à la hauteur de boues dans le réacteur au-dessus de l'injecteur. Ces pertes de charge doivent être compensées par l'utilisation de vapeur de flash à plus haute pression pour obtenir un bon transfert d'énergie dans les boues.

Enfin, un tel procédé conduit à la nécessité de mettre en œuvre des volumes de réacteurs importants.

US 2012/111515A1 décrit une installation de traitement de boues par hydrolyse thermique comprenant trois réacteurs d'hydrolyse thermique fonctionnement de façon décalée et dans laquelle de la vapeur de récupération est injectée à tour de rôle dans chacun des réacteurs d'hydrolyse thermique.

Il a aussi été proposé, dans EP1198424, un procédé de traitement continu de boues dans lequel des boues déjà préchauffées sont pompées puis à nouveau préchauffées dans un réacteur de préchauffage avant d'être à nouveau pompées vers un réacteur d'hydrolyse thermique puis transférées dans un réservoir de dépressurisation produisant de la vapeur de flash.

Dans un tel procédé, la chaleur des boues hydrolysées est utilisée, grâce à un échangeur de chaleur, pour préchauffer les boues, avant d'injecter dans celles-ci la vapeur de flash provenant de la cuve de dépressurisation et de les transférer dans un réacteur de préchauffage.

Une telle technique présente l'inconvénient de mettre en œuvre, outre un échangeur de chaleur, trois réacteurs, à savoir un réacteur de préchauffage, un réacteur d'hydrolyse thermique et un réacteur de dépressurisation. Les installations correspondantes sont donc complexes et volumineuses. Le temps de traitement des boues est de plus relativement long, les boues devant transiter successivement dans trois réacteurs avec, dans chacun d'entre eux, un temps de rétention pouvant être long.

On notera aussi qu'une telle technique nécessite la mise en œuvre d'une pompe de recirculation des boues hydrolysées depuis le réacteur de dépressurisation vers l'échangeur de chaleur, ainsi que d'une pompe intermédiaire pour l'acheminement des boues du réacteur de préchauffage vers le réacteur d'hydrolyse thermique.

FR3003558A1 décrit un procédé d'hydrolyse thermique de boues en continu dans lequel de la vapeur est injectée dans les boues grâce à une injecteur mélangeur dynamique.

Quel que soit le procédé d'hydrolyse thermique utilisé, le principal poste de cout/dépense est lié à la quantité de vapeur injectée dans les boues. Au niveau du dimensionnement, cela influe sur la taille des installations de production de vapeur mises en œuvre à cet effet (chaudière, générateur de vapeur, récupérateur de vapeur, tuyauterie, ...). Au niveau de l'exploitation, cela influe sur la consommation de combustible pour générer la vapeur. Il est donc important de réduire au mieux la quantité de vapeur mise en œuvre pour traiter les boues.

La quantité de vapeur à injecter dans une boue afin de porter celle-ci à la température souhaitée pour procéder à son hydrolyse thermique est liée à sa concentration en matières sèches. Les boues sont en effet constituées d'un mélange de matières sèches et d'eau. Lors du chauffage des boues, il est donc nécessaire d'augmenter la température à la fois des matières sèches et de l'eau. Il en résulte que moins la concentration de la boue est importante, c'est-à-dire que moins sa siccité est importante, plus le volume de boue à chauffer est important et donc plus la quantité de vapeur vive nécessaire à la chauffer est importante. Ceci engendre une augmentation de la consommation en vapeur vive, et par conséquence une augmentation de la consommation en combustible (biogaz, fuel, gaz naturel, ...) utilisé pour produire cette vapeur vive. En outre, le risque d'émanation d'odeurs à tout niveau de la filière de traitement des boues est d'autant plus important que le volume des boues hydrolysées est élevé. Il convient donc de traiter des boues les plus concentrées possible, c'est-à-dire ayant une siccité importante, afin de limiter la consommation de vapeur et de réduire la production de boues hydrolysées et par conséquent les émanations d'odeurs. Le transfert de la vapeur dans une boue fortement concentrée pose toutefois problème. En effet, il a notamment été constaté dans les procédés existants que le transfert de la vapeur dans les boues fortement concentrées n'était pas optimal. Ce problème de transfert de vapeur est notamment rencontré lors de l'injection de vapeur flash dans les boues à traiter, en début d'hydrolyse thermique. Ceci peut s'expliquer par le fait que le transfert de vapeur dans les boues est lié à leur concentration, le transfert étant d'autant plus faible que la concentration des boues est importante. La concentration des boues à traiter ne doit donc pas être trop élevée pour ne pas entraver le transfert de vapeur, notamment celui de la vapeur flash. Au final, l'optimisation de l'hydrolyse thermique des boues en termes de réduction de la consommation en vapeur suppose de prendre en considération deux facteurs antagonistes suivants :
- plus la boue est concentrée, plus le volume à traiter est faible (plus les risques d'émanations d'odeurs sont faibles) et plus la quantité de vapeur à injecter pour chauffer ces boues est faible,
- MAIS plus la boue est concentrée, plus il est difficile d'effectuer le transfert de vapeur et donc d'utiliser une faible quantité de vapeur : c'est donc une limite constatée dans les procédés de l'art antérieur, selon lesquels les boues ne sont pas concentrées au-delà d'une certaine valeur au risque d'avoir un mauvais transfert et une consommation trop élevée de vapeur.

Afin de limiter la consommation de vapeur tout en améliorant l'efficacité de l'hydrolyse thermique des boues notamment celles ayant une siccité élevée, il a été proposé un autre procédé d'hydrolyse thermique décrit dans FR2990429. Un tel procédé est mené dans au moins deux réacteurs fonctionnant en parallèle dans chacun desquels les boues subissent un cycle complet d'hydrolyse thermique, ledit cycle étant décalé dans le temps d'un réacteur à l'autre pour utiliser la vapeur de flash produite à partir d'un réacteur pour l'injecter dans l'autre réacteur. Le procédé comprend une étape consistant à extraire une partie des boues contenues dans un réacteur d'hydrolyse thermique puis à les réintroduire dans ce réacteur, c'est-à-dire consistant à recirculer une partie du contenu d'un réacteur d'hydrolyse thermique dans lui-même. Ceci permet d'améliorer le transfert de la vapeur dans les boues.

Un tel procédé ne donne toutefois pas pleinement satisfaction. En effet, il conduit à rallonger les durées des cycles et donc à augmenter la taille des installations le mettant en œuvre. De plus, il conduit à introduire la vapeur de flash dans des boues non préchauffées, ce qui ne favorise pas le transfert thermique de la vapeur vers les boues. En pratique, il est nécessaire de maintenir dans chaque réacteur d'hydrolyse thermique un « talon » de boues chaudes qui représente environ 10% du volume du réacteur et de limiter le remplissage de ces réacteurs. A chaud, les réacteurs ne peuvent être remplis au-delà de 70 % de leur capacité volumique. Enfin, la siccité des boues pouvant être traitées par ce procédé reste en pratique limitée à 16 % à 18 % de matières sèches.

D'autres procédés de l'art antérieur mettent en œuvre un réacteur de préchauffage des boues en amont du réacteur d'hydrolyse thermique. Toutefois ces procédés ont des injecteurs de vapeur de flash en partie basse du réacteur de préchauffage, des moyens d'homogénéisation telle qu'une pompe de recirculation et des moyens d'amenée des boues préchauffées dans le réacteur d'hydrolyse thermique. Le temps de rétention des boues préchauffées dans ce réacteur de préchauffage nécessite un volume de réacteur de préchauffage important.

### Objectifs de l'invention

L'invention a pour objectif de pallier au moins certains des inconvénients de l'art antérieur cité ci-dessus.

Notamment, un objectif de l'invention est de fournir un procédé d'hydrolyse thermique de boues qui permet, dans au moins un mode de réalisation, par rapport aux procédés de l'art antérieur, d'améliorer le transfert d'énergie apportée par la vapeur de flash et la vapeur vive aux boues et ainsi d'améliorer l'hydrolyse thermique de celles-ci.

Un autre objectif de la présente invention est de décrire un tel procédé qui permet d'améliorer ce transfert d'énergie à des boues non préchauffées.

Encore un autre objectif de l'invention est de proposer un tel procédé qui permet, dans au moins certains modes de réalisation, d'améliorer un tel transfert d'énergie à des boues présentant une siccité élevée, en pratique pouvant présenter une siccité allant jusqu'à 40 %.

Encore un objectif de la présente invention est de proposer un tel procédé qui permet de diminuer la consommation de vapeur vive.

Encore un objectif de la présente invention est de réduire la température des boues en sortie de cuve de récupération desdites boues.

Encore un objectif de l'invention est de proposer un procédé permettant de s'affranchir de toute étape de préchauffage mettant en œuvre un échangeur de chaleur et/ou un réacteur de préchauffage en amont des réacteurs d'hydrolyse.

Encore un autre objectif de l'invention est de décrire une installation pour la mise en œuvre d'un tel procédé qui, à capacités de traitement égales, est moins volumineuse que les installations utilisées pour la mise en œuvre des procédés de l'art antérieur.

Notamment, un objectif de la présente invention est de décrire une telle installation ne mettant en œuvre aucun réservoir de préchauffage.

Egalement, un objectif de la présente invention, est de décrire une telle installation ne nécessitant pas l'utilisation d'échangeur de chaleur pour préchauffer les boues.

Egalement un objectif de l'invention est de proposer une telle installation qui ne nécessite pas de pompage des boues après leur entrée dans l'installation.

### Exposé de l'invention

Ces objectifs, ainsi que d'autres qui apparaitront par la suite, sont atteints grâce à l'invention qui concerne un procédé d'hydrolyse thermique de boues contenant de la matière organique mettant en œuvre un groupe de réacteurs d'hydrolyse thermique selon la revendication 1.

Selon l'invention, les termes « mélangeur dynamique » visent tout mélangeur constitué d'une chambre, préférentiellement cylindrique, recevant en continu lesdites boues, de moyens d'amenée de vapeur directement dans ladite chambre et de moyens permettant de provoquer une agitation vigoureuse, grâce à des moyens mécaniques motorisés, des différentes phases entrant dans cette chambre. L'agitation est suffisamment forte pour permettre l'obtention d'un mélange essentiellement monophasique de boues et de vapeur. En pratique, de tels moyens sont constitués de pales montées sur un axe de rotation mu par un rotor tournant à une vitesse supérieure à 500 tr/mn, préférentiellement entre 1000 tr/mn et 2000 tr/mn. On notera que de tels moyens mécaniques d'agitation n'ont pas vocation à pousser la matière dans la chambre mais seulement à l'agiter. Ainsi, lorsqu'ils incluent des pâles, celles-ci sont conformées, selon les connaissances de l'homme de l'art, pour que leur mise en mouvement ne provoque pas d'avancée de la matière dans la chambre. Un tel mélangeur dynamique ne génère aucune perte de charge. Il ne s'agit pas d'un réservoir, la chambre présentant un volume faible de quelques litres, le temps de séjour des boues dans cette chambre n'étant que de quelques secondes et les boues n'étant donc pas retenues dans celles-ci.

Ainsi, selon l'invention, la mise en œuvre d'un tel mélangeur dynamique lors de l'étape a) d'amenée des boues dans les réacteurs d'hydrolyse, permet de favoriser le transfert d'énergie de la vapeur vive dans les boues lors de l'étape b) et, si nécessaire, de l'étape c) du procédé. En effet, la déstructuration des boues grâce au mélangeur dynamique permet de les homogénéiser et de diminuer leur viscosité. Ainsi, le transfert d'énergie se fait plus aisément. De ce fait, il est possible de s'affranchir de toute étape de préchauffage mettant en œuvre un échangeur de chaleur et/ou un réacteur de préchauffage en amont des réacteurs d'hydrolyse.

Le procédé selon l'invention ouvre donc la possibilité de traiter des boues présentant une siccité élevée. En pratique les boues à traiter pourront présenter une siccité comprise entre 10 % et 40 % en poids de matières sèches, avantageusement comprise entre 15 % et 35 % en poids de matières sèches. Pour arriver à de tels taux, les boues à traiter pourront être préalablement quelque peu diluées.

Le procédé selon l'invention permet de s'affranchir des pertes de charge résultant de l'utilisation d'injecteurs de vapeur dans les réacteurs et les cuves de préchauffage de l'art antérieur et de la hauteur de boues au-dessus de ces injecteurs. Ainsi, il est possible, avec le procédé selon l'invention, d'utiliser une vapeur à plus basse pression et ainsi de récupérer plus de vapeur flash.

Le procédé selon l'invention pourra notamment être mis en œuvre en amont d'une étape de digestion anaérobie des boues ou en aval d'une telle étape pour hygiéniser les boues, réduire le volume final de boues et augmenter le volume de biogaz produit durant l'étape de digestion. (Comme déjà indiqué ci-dessus, lorsque le procédé selon l'invention sera prévu en aval d'une étape de digestion, il pourra être qualifié de carbonisation hydrothermale).

Préférentiellement, le procédé inclut une évacuation des gaz incondensables dudit réacteur d'hydrolyse thermique durant lesdites étapes a) ou d).

Selon une variante, l'étape a) est mise en œuvre en plaçant ledit réacteur d'hydrolyse en dépression pour faciliter l'évacuation des gaz incondensables

Egalement selon une variante, la durée de l'étape a) est préférentiellement comprise entre 5 et 30 mn.

Egalement selon une variante, la durée de la durée de l'étape b) est préférentiellement comprise entre 5 et 30 mn.

Egalement selon une variante, la durée de la durée de l'étape c) est préférentiellement comprise entre 5 et 120 mn, préférentiellement entre 5 et 30 mn.

Egalement selon une variante, la durée de la durée de l'étape d) est préférentiellement comprise entre 5 et 30 mn.

Chaque succession de cycles pourra comprendre un temps de pause entre chaque cycle. Ce temps de pause a lieu avantageusement à l'issue de l'étape d) de vidange et de dépressurisation.

Avantageusement la durée de chaque cycle est préférentiellement comprise entre 20 et 210 mn.

Egalement avantageusement, durant l'étape c) d'hydrolyse thermique, la température dudit lot de boues est comprise entre 120°C et 200 °C, de façon encore préférée entre 140 °C et 180 °C.

Egalement préférentiellement, durant l'étape c) d'hydrolyse thermique, la pression à l'intérieur du réacteur d'hydrolyse thermique est comprise entre 2 et 16 bar a, de façon encore préférée entre 3,5 et 10 bar a.

Egalement préférentiellement, la pression à l'intérieur de la cuve de récupération est maintenue entre 1,1 et 3 bar a.

Préférentiellement, ladite étape a) est mise en œuvre de façon telle, que lors de l'étape c), le réacteur d'hydrolyse thermique soit rempli entre 70% et 95 % de sa capacité volumique totale.

L'invention concerne également une installation de traitement de boues pour la mise en œuvre du procédé décrit ci-dessus selon la revendication 15.

Selon un mode de réalisation particulièrement intéressant ledit rotor à pales tourne préférentiellement à une vitesse comprise entre 1000 tr/mn et 2000 tr/mn.

Egalement avantageusement, lesdits réacteurs d'hydrolyse thermique sont reliés audit au moins un mélangeur dynamique par des canalisations débouchant dans la partie supérieure desdits réacteurs d'hydrolyse thermique.

Avantageusement, lesdits moyens d'amenée de vapeur vive dans lesdits réacteurs d'hydrolyse thermique incluent des canalisations débouchant dans la partie inférieure desdits réacteurs d'hydrolyse thermique.

Préférentiellement, lesdits réacteurs d'hydrolyse thermique sont pourvus de moyens d'évacuation des gaz incondensables.

### Liste des figures

L'invention, ainsi que les différents avantages qu'elle présente, seront plus facilement compris grâce à la description qui va suivre d'un mode de réalisation de l'installation et de deux variantes de mise en œuvre d'un procédé selon celle-ci, donné à titres d'exemples non limitatifs, en référence aux figures, dans lesquelles :
- la figure 1 représente, de façon schématique, un mode de réalisation d'une installation selon la présente invention incluant quatre réacteurs d'hydrolyse thermique ;
- la figure 2 représente un synoptique de mise œuvre de l'installation de la figure 1 grâce à un exemple de procédé selon l'invention ;
- la figure 3 représente un synoptique de mise œuvre de l'installation de la figure 1 grâce à un autre exemple de procédé selon l'invention ;
- la figure 4 est un graphe illustrant le résultats de tests comparatifs obtenus grâce à l'invention d'une part et à l'art antérieur tel que décrit dans FR2820735 d'autre part.

### Description de modes de réalisation de l'invention

### Installation

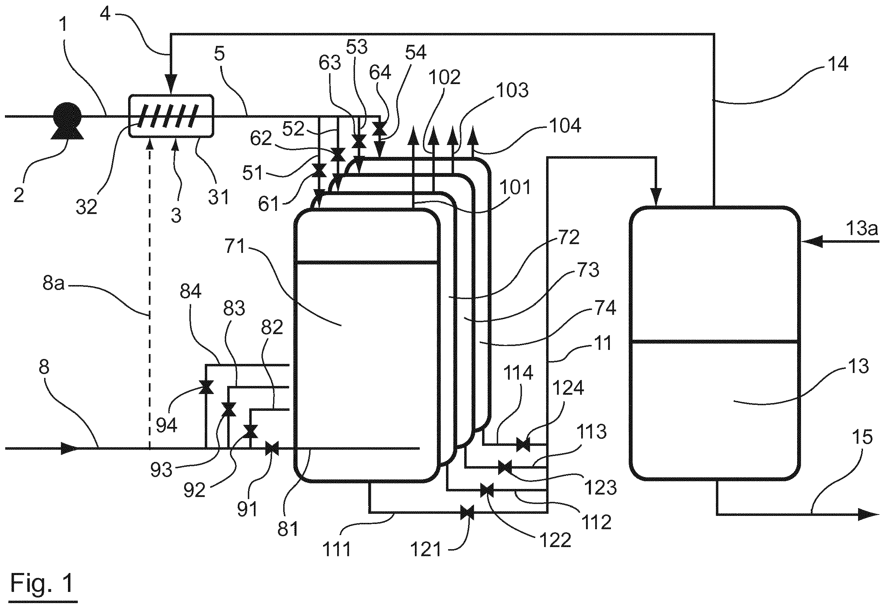

En référence à la figure 1, le mode de réalisation de l'installation selon l'invention ici décrit comprend un groupe de quatre réacteurs d'hydrolyse thermique. On notera toutefois que, dans d'autres modes de réalisation, le nombre de réacteurs d'hydrolyse thermique, qui sera toujours d'au moins 2, pourra être différent de 4. En pratique le nombre de réacteurs d'hydrolyse thermique sera préférentiellement compris entre 2 et 6.

L'installation représentée comprend une canalisation 1 d'amenée de boues à traiter à un mélangeur dynamique 3. A cette fin, une pompe 2 est prévue sur la canalisation 1. Ces boues ne sont pas préchauffées.

Le mélangeur dynamique 3 comprend une chambre essentiellement cylindrique 31 à l'intérieur de laquelle est prévu un rotor à pales 32. Une arrivée 4 de vapeur de récupération équipe également ce mélangeur dynamique.

L'installation comprend par ailleurs 4 réacteurs d'hydrolyse thermique 71, 72, 73, 74. Ces réacteurs d'hydrolyse thermique sont identiques et présentent donc chacun la même capacité volumique. Ils sont pourvus chacun, dans leur partie supérieure de moyens d'évacuation 101, 102, 103, 104 destinés à évacuer les gaz incondensables issus des boues hydrolysées qu'ils traitent.

L'installation comprend par ailleurs une cuve 13 de récupération des boues hydrolysées provenant des réacteurs 71, 72, 73, 74. Cette cuve 13 est une cuve fermée pourvue dans sa partie supérieure d'une canalisation 14 reliée à l'arrivée de vapeur de récupération équipant le mélangeur dynamique 3.

Enfin, l'installation comprend des moyens 15 d'évacuation de la cuve 13 des boues traitées hydrolysées.

On notera que dans l'installation ici décrite, un seul mélangeur dynamique 3 est mis en œuvre pour desservir les quatre réacteurs d'hydrolyse thermique 71, 72, 73, 74. Des moyens spécifiques sont inclus dans l'installation pour permettre la mise en communication fluidique de ce mélangeur dynamique 3 commun alternativement avec chacun de ces réacteurs d'hydrolyse thermique 71, 72, 73, 74. Ces moyens incluent une canalisation 5 dont une extrémité est reliée au mélangeur dynamique 3 et dont l'autre extrémité est reliée à des branches de canalisation 51, 52, 53, 54, desservant respectivement les réacteurs d'hydrolyse 71, 72, 73, 74. Sur chacune de ces branches de canalisation 51, 52, 53, 54 est prévue une vanne 61, 62, 63, 64 respectivement.

Les réacteurs d'hydrolyse thermique 71, 72, 73, 74 sont par ailleurs pourvus de moyens 8 d'amenée de vapeur vive dans leur partie inférieure. Cette vapeur vive est produite à partir d'une chaudière (non représentée). Ces moyens d'amenée de vapeur vive aux réacteurs d'hydrolyse thermique incluent une canalisation 8 dont une extrémité est reliée à la chaudière et dont l'autre extrémité est reliée à quatre branches de canalisation 81, 82, 83, 84 desservant respectivement les réacteurs d'hydrolyse thermique 71, 72, 73, 74. Chacune de ces branches de canalisation 81, 82, 83, 84 est équipée d'une vanne 91, 92, 93, 94 respectivement. Ces moyens permettent d'alimenter alternativement en vapeur vive chacun des réacteurs d'hydrolyse thermique 71, 72, 73, 74. La canalisation 8 comprend une dérivation 8a pour amener de la vapeur vive au mélangeur dynamique 3 lors du démarrage de l'installation, lorsqu'il n'y a pas encore de vapeur de récupération disponible. La cuve 13 est quant à elle pourvue d'une arrivée d'eau 13a pour empêcher l'émission de vapeur de flash lors de la mise à l'arrêt de l'installation.

La cuve 13 est reliée aux réacteurs d'hydrolyse thermique 71, 72, 73, 74 par des moyens de mise en communication fluidique de cette cuve 13 alternativement avec chacun des réacteurs d'hydrolyse thermique 71, 72, 73, 74. Ces moyens de mise en communication fluidique incluent une canalisation 11 qui débouche à l'une de ces extrémités dans la partie supérieure de la cuve de récupération 13 et qui est reliée par ailleurs aux réacteurs d'hydrolyse thermique 71, 72, 73, 74 par des branches de canalisation 111, 112, 113, 114 respectivement situées dans la partie inférieure de chaque réacteur. Chacune de ces branches de canalisation 111, 112, 113, 114 est équipée d'une vanne 121, 122, 123, 124 respectivement.

### Premier exemple de mis en œuvre du procédé

Le fonctionnement de l'installation représentée à la figure 1 pour la mise en œuvre de cet exemple de procédé selon l'invention va maintenant être décrit.

Pour les besoins de clarté de cette description, ce fonctionnement va d'abord être décrit en décrivant un cycle de traitement mettant en œuvre un des réacteurs de l'installation.

Selon un tel cycle, un lot de boues est amené lors d'une étape a), dite de remplissage, en l'absence de tout préchauffage mis en œuvre par un échangeur de chaleur et/ou une cuve de préchauffage, dans le réacteur d'hydrolyse thermique 71. Pour ce faire, les vannes 62, 63, 64 équipant les branches de canalisation 52, 53, 54 desservant les réacteurs d'hydrolyse thermique 72, 73, 74 respectivement sont fermées tandis que la vanne 61 équipant la branche de canalisation 51 desservant le réacteur 71 est ouverte.

Ce lot de boues est pompé grâce à la pompe 2 par la canalisation 1. Il transite dans le mélangeur dynamique 3 où il subit un mélange intime avec de la vapeur de récupération apportée au mélangeur dynamique 3 via l'arrivée 4 de vapeur de récupération dont est pourvu celui-ci. Ce passage des boues dans le mélangeur dynamique permet de les déstructurer, ce qui conduit à abaisser leur viscosité et à les homogénéiser. Ainsi, la récupération de la chaleur des boues hydrolysées est favorisée.

Durant cette étape a), dite étape de remplissage, le réacteur d'hydrolyse thermique 71 est rempli de façon telle que lors de l'étape c) le réacteur d'hydrolyse thermique soit rempli entre 70% et 95 % de sa capacité volumique totale. Le volume de l'intérieur du réacteur non occupé par les boues est occupé par un ciel gazeux contenant entre autre des gaz incondensables qui sont évacuées par la canalisation 101 prévue dans la partie supérieure du réacteur durant l'étape a).

On notera que pour faciliter l'évacuation de ces gaz incondensables durant l'étape a) il pourra être prévu de pourvoir les canalisations 101 de moyens d'aspiration permettant de placer en légère dépression le contenu du réacteur.

Dans le présent exemple, cette étape a) dure vingt minutes.

A la fin de celle-ci, la vanne 61 qui équipe la branche de canalisation 51 amenant le mélange de boues et de vapeur au réacteur 71, est fermée.

Grâce à l'invention, selon laquelle la viscosité des boues a été diminuée et leur homogénéité améliorée grâce à leur passage dans le mélangeur dynamique 3, le transfert d'énergie de la vapeur de récupération dans les boues transitant dans le mélangeur dynamique est optimisé. La récupération d'énergie est donc optimisée.

Lors d'une étape b), de la vapeur vive (vapeur d'eau) produite par la chaudière est amenée par la canalisation 8 et distribuée au réacteur 71 par la branche de canalisation 81. Cette injection de vapeur vive est effectuée en pied de réacteur afin de favoriser sa diffusion et sa condensation dans les boues. Dans ce but, la vanne 91 équipant cette branche de canalisation 81 est ouverte tandis que les vannes 92, 93, 94 équipant les branches de canalisation 82, 83, 84 respectivement sont fermées. Cette injection de vapeur au sein du réacteur 71 conduit à augmenter la température et la pression régnant dans celui-ci.

Dans le présent mode de réalisation, cette étape b) d'injection de vapeur vive dure vingt minutes et permet d'amener la température du lot de boues présent dans le réacteur 71 à une température comprise entre 120 °C et 200°C préférentiellement entre 140°C et 180°C. Cette température d'hydrolyse thermique pourra être choisie en fonction notamment de la nature des boues et de la finalité recherchée par le procédé (hygiénisation, solubilisation...). Le réacteur d'hydrolyse thermique 71 étant fermé par ailleurs, l'injection de vapeur permet également d'augmenter la pression régnant à l'intérieur de celui-ci. En pratique, cette pression est montée entre 2 et 16 bar a.

Grâce à l'invention, selon laquelle la viscosité des boues a été diminuée et leur homogénéité améliorée grâce à leur passage dans le mélangeur dynamique 3, le transfert d'énergie de la vapeur vive dans les boues à hydrolyser réalisé dans le réacteur est également optimisé. Les boues sont donc chauffées plus facilement et la consommation de vapeur vive optimisée.

Durant cette étape b) d'injection de vapeur vive, la cuve 13 n'est pas en communication fluidique avec l'intérieur du réacteur 71. La vanne 121 équipant la branche de canalisation 111 prolongée par la canalisation 11 débouchant dans la cuve 13 est donc fermée.

Durant une étape c), dite de réaction d'hydrolyse thermique, qui dans cet exemple dure vingt minutes également, l'hydrolyse thermique des boues se produit, la vanne 61 et la vanne 121 restant fermées.

Grâce à l'invention, selon laquelle la viscosité des boues a été diminuée et leur homogénéité améliorée grâce à leur passage dans le mélangeur dynamique 3, le transfert d'énergie de la vapeur dans les boues est également optimisé durant cette étape.

A l'issue de cette étape c), la vanne 121 est ouverte ce qui provoque, lors d'une étape d), la vidange du contenu du lot de boues hydrolysées contenues dans le réacteur 71 vers la cuve des récupérations 13 et la dépressurisation du réacteur. Cette dépressurisation est autorisée par le fait que la cuve 13 présente une pression bien inférieure à celle régnant à l'intérieur du réacteur d'hydrolyse 71 durant l'étape c) d'hydrolyse thermique. En pratique cette pression régnant à l'intérieur de la cuve 13 est comprise entre 1,1 bar a et 3 bar a. Lors de cette étape d) de vidange du contenu du lot de boues hydrolysées du réacteur vers la cuve 13, la dépressurisation des boues provoque l'émission de vapeur de récupération. Cette vapeur de récupération est évacuée de la cuve 13 par la canalisation 14, elle même reliée à l'arrivée de vapeur de récupération du mélangeur dynamique 3. A l'issue de cette étape d) les boues hydrolysées sont évacuées de l'installation par la canalisation 15. Cette étape d) dure également vingt minutes.

Dans le présent mode de réalisation, les étapes a), b), c) et d) ont chacune une durée de vingt minutes et constituent un cycle de traitement de quatre-vingt minutes.

Ce cycle est immédiatement répété pour un, puis d'autres lots de boues à traiter dans le réacteur 71. Les traitements de lot de boues différents se succèdent donc lors d'une succession de cycles de quatre-vingt minutes au cours desquels ces différents lots de boues transitent dans le réacteur 71.

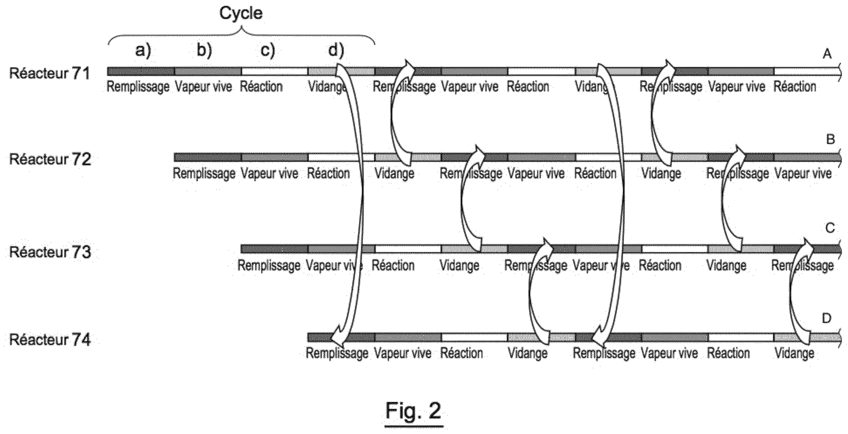

. Sur la figure 2, les étapes a) de remplissage sont représentées en noir; les étapes b) d'injection de vapeur vive sont représentées en gris foncé ; les étapes c) de réaction d'hydrolyse thermique sont représentées en blanc et les étapes d) de vidange et de dépressurisation sont représentées en gris clair.

Des successions identiques de cycles de traitement sont mises en œuvre pour d'autres lots de boues grâce aux réacteurs 72, 73, 74 (pourvus de moyens 102, 103, 104 d'évacuation des gaz incondensables). La description des cycles de ces successions de cycles est identique à celle faite ci-dessus en référence au réacteur 71, sauf en ce que ce sont les vannes associées aux réacteurs 72, 73, 74 qui sont actionnées, à savoir :

la vanne 62 prévue sur la branche de canalisation 52, la vanne 92 prévue sur la branche de canalisation 82 et la vanne 122 prévue sur la branche de canalisation 112 pour ce qui est du cycle de traitement mis en œuvre grâce au réacteur 72 ;

la vanne 63 prévue sur la branche de canalisation 53, la vanne 93 prévue sur la branche de canalisation 83 et la vanne 123 prévue sur la branche de canalisation 113 pour ce qui est du cycle de traitement mis en œuvre grâce au réacteur 73 ;

la vanne 64 prévue sur la branche de canalisation 54, la vanne 94 prévue sur la branche de canalisation 84 et la vanne 124 prévue sur la branche de canalisation 114 pour ce qui est du cycle de traitement mis en œuvre grâce au réacteur 74.

Selon le procédé de l'invention, les débuts de cycles de ces différentes successions A, B, C, D de cycles, sont décalés dans le temps de façon telle que les étapes a) d'une succession de cycles soient concomitantes aux étapes d) d'une autre succession de cycle, la vapeur de récupération émise pendant les étapes d) d'une succession de cycle constituant la vapeur de récupération injectée pendant les étapes a) d'une autre succession de cycles. Ceci est symbolisé sur la figure 2 par les flèches incurvées. Dans le présent exemple, ce décalage entre les débuts de cycle de chaque succession de cycles est de 20 minutes.

Ainsi, en référence à la figure 2, la vapeur de récupération émise pendant les étapes d) de la succession de cycles A constitue la vapeur de récupération injectée pendant les étape a) de la succession de cycles D, la vapeur de récupération émise pendant les étapes d) de la succession de cycles B constitue la vapeur de récupération injectée pendant les étape a) de la succession de cycles A, la vapeur de récupération émise pendant les étapes d) de la succession de cycles C constitue la vapeur de récupération injectée pendant les étape a) de la succession de cycles B, la vapeur de récupération émise pendant les étapes d) de la succession de cycles D constitue la vapeur de récupération injectée pendant les étape a) de la succession de cycles C.

L'alimentation en boues dans l'installation, l'alimentation en vapeur vive alternativement dans chaque réacteur d'hydrolyse thermique et l'évacuation des boues de l'installation sont ainsi continues.

### Deuxième exemple de mis en œuvre du procédé

Dans cet exemple de réalisation, le réacteur 74 est à l'arrêt et seuls les réacteurs d'hydrolyse thermique 71, 72 et 73 de l'installation sont utilisés pour mettre en œuvre le procédé selon l'invention.

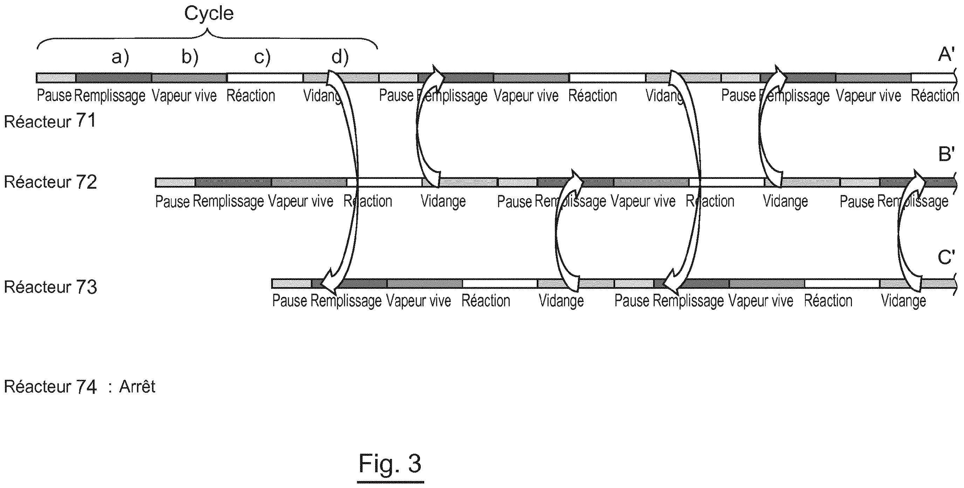

Par ailleurs, le cycle de traitement a été augmenté en intégrant 10 minutes de pause à la fin de chaque étape d) de vidange et de dépressurisation, les étapes a), b), c) et d) durant chacune 20 minutes. Les successions de tels cycles de 90 minutes sont symbolisées sur la figure 3 par les lignes A', B', C'.

### Comparaison avec l'art antérieur

Des boues ont été traitées selon le premier exemple de mise en œuvre du procédé de l'invention décrit ci-dessus d'une part et la technique décrite dans FR2820735 d'autre part, la durée de l'étape d'hydrolyse thermique étant dans les deux cas de 20 minutes.

Les résultats de ces tests comparatifs ont permis, grâce à l'invention de raccourcir notablement les cycles de traitement, en pratique de 120 minutes (pour la technique selon FR2820735) à 80 minutes (pour l'invention mise en œuvre selon le premier exemple de mise en œuvre du procédé selon celle-ci décrit ci-dessus).

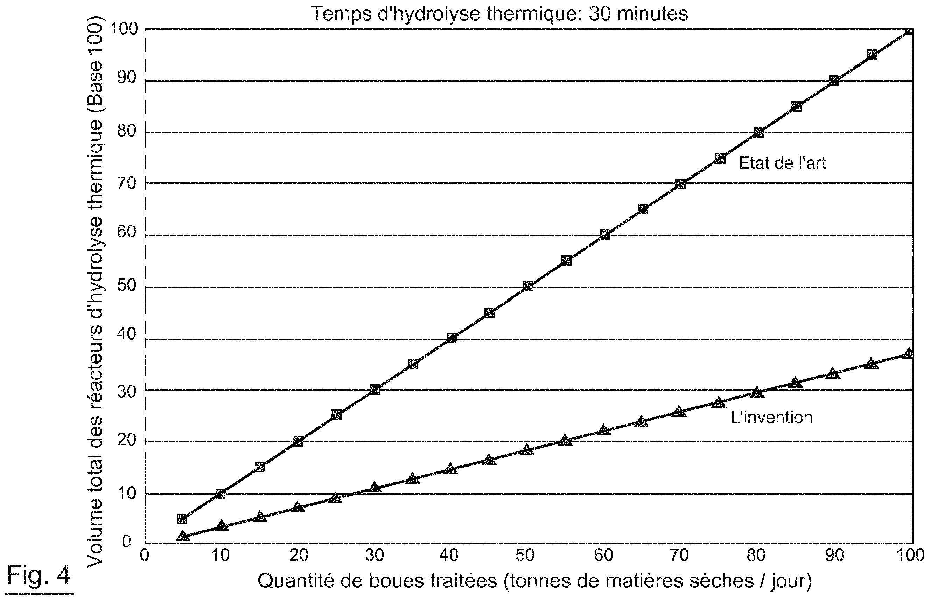

Les volumes de réacteurs nécessaires au traitement de ces boues ont été comparés. Le graphe selon la figure 4, qui traduit les volumes cumulés de réacteurs d'hydrolyse thermique nécessaires aux traitements de ces boues, montre que ces volumes sont bien inférieurs dans le cadre de l'invention.

Par rapport à cet art antérieur, on notera aussi que l'invention n'implique pas la nécessité de conserver dans les réacteurs d'hydrolyse thermique une quantité (« talon ») de boues chaudes entre chaque cycle, ce qui permet d'optimiser les quantités de boues traitées dans chaque réacteur et le remplissage de ceux-ci.

### Comparaison avec l'art antérieur

Des boues ont été traitées selon le premier exemple de mise en œuvre du procédé de l'invention décrit ci-dessus d'une part et la technique décrite dans FR2820735 d'autre part, la durée de l'étape d'hydrolyse thermique étant dans les deux cas de 20 minutes.

Les résultats de ces tests comparatifs ont permis, grâce à l'invention de raccourcir notablement les cycles de traitement, en pratique de 120 minutes (pour la technique selon FR2820735) à 80 minutes (pour l'invention mise en œuvre selon le premier exemple de mise en œuvre du procédé selon celle-ci décrit ci-dessus).

Les volumes de réacteurs nécessaires au traitement de ces boues ont été comparés. Le graphe selon la figure 4, qui traduit les volumes cumulés de réacteurs d'hydrolyse thermique nécessaires aux traitements de ces boues, montre que ces volumes sont bien inférieurs dans le cadre de l'invention.

Par rapport à cet art antérieur, on notera aussi que l'invention n'implique pas la nécessité de conserver dans les réacteurs d'hydrolyse thermique une quantité (« talon ») de boues chaudes entre chaque cycle, ce qui permet d'optimiser les quantités de boues traitées dans chaque réacteur et le remplissage de ceux-ci.

## Revendications

1. Procédé d'hydrolyse thermique de boues mettant en œuvre un groupe de réacteurs d'hydrolyse thermique (71, 72, 73, 74) **caractérisé en ce qu'**il comprend des successions de cycles, chacune des ces successions de cycle étant dédiée à un desdits réacteurs d'hydrolyse thermique (71, 72, 73, 74), chaque cycle comprenant :
- une étape a) d'amenée d'un lot de boues à traiter non préchauffées dans un réacteur d'hydrolyse thermique, ladite étape d'amenée comprenant le passage en continu des boues dudit lot de boues dans un mélangeur dynamique (3) comprenant une chambre (31) essentiellement cylindrique présentant un volume faible de quelques litres et accueillant des pales (32) montées sur un axe de rotation mu par un rotor tournant à une vitesse supérieure à 500 tr/mn, ledit mélangeur dynamique étant pourvu d'une arrivée (4) de vapeur de récupération dans lequel est injectée de la vapeur de récupération, le temps de séjour des boues dans ladite chambre (31) essentiellement cylindrique dudit mélangeur dynamique n'étant que de quelques secondes ;
- une étape b) d'injection de vapeur vive dans ledit réacteur d'hydrolyse thermique contenant ledit lot de boues de façon à augmenter la température et la pression régnant dans celui-ci ;
- une étape c) d'hydrolyse thermique dudit lot de boues dans ledit réacteur d'hydrolyse thermique ;
- une étape d) de vidange du contenu dudit lot de boues hydrolysé dudit réacteur d'hydrolyse thermique vers une cuve de récupération (13), et de dépressurisation concomitante dudit réacteur provoquant l'émission de vapeur de récupération depuis ladite cuve de récupération (13);
les débuts de cycle des successions de cycles étant décalés dans le temps de façon telle que les étapes a) d'une succession de cycles soient concomitantes aux étapes d) d'une autre succession de cycle, la vapeur de récupération émise pendant les étapes d) d'une succession de cycle constituant la vapeur de récupération injectée pendant les étapes a) d'une autre succession de cycles.

2. Procédé selon la revendication 1 **caractérisé en ce que** lesdites boues à traiter présentent une siccité comprise entre 10% et 40 % en poids de matières sèches.

3. Procédé selon la revendication 2 **caractérisé en ce que** lesdites boues à traiter présentent une siccité comprise entre 10 et 35 % en poids de matières sèches.

4. Procédé selon l'une quelconque des revendications 1 à 3 **caractérisé en ce qu'**il comprend une évacuation des gaz incondensables dudit réacteur d'hydrolyse thermique durant lesdites étape a) ou d).

5. Procédé selon la revendication 4 **caractérisé en ce que** l'étape a) est mise en œuvre en plaçant ledit réacteur d'hydrolyse en dépression.

6. Procédé selon l'une quelconque des revendications 1 à 5 **caractérisé en ce que** la durée de l'étape a) est comprise entre 5 et 30 mn, la durée de l'étape b) est comprise entre 5 et 30 mn, la durée de l'étape d) est comprise entre 5 et 30 mn, et la durée de l'étape c) est comprise entre 5 et 120 mn.

7. Procédé selon la revendication 6 **caractérisé en ce que** la durée de l'étape c) est comprise entre 5 et 30 mn

8. Procédé selon l'une quelconques des revendications 1 à 7 **caractérisé en ce que** la durée de chaque cycle est comprise entre 20 mn et 210 mn.

9. Procédé selon l'une quelconque des revendications 1 à 8 **caractérisé en ce que**, durant l'étape c) d'hydrolyse thermique, la température dudit lot de boues est comprise entre 120°C et 200 °C.

10. Procédé selon la revendication 9 **caractérisé en ce que**, durant ladite étape c) d'hydrolyse thermique, la température dudit lot de boues est comprise entre 140 °C et 180 °C.

11. Procédé selon l'une quelconque des revendications 1 à 10 **caractérisé en ce que**, durant l'étape c) d'hydrolyse thermique, la pression à l'intérieur du réacteur d'hydrolyse thermique est comprise entre 2 et 16 bar a.

12. Procédé selon l'une quelconque des revendications 1 à 11 **caractérisé en ce que** durant l'étape c) d'hydrolyse thermique, la pression à l'intérieur du réacteur d'hydrolyse thermique est comprise entre 3,5 et 10 bar a.

13. Procédé selon l'une quelconque des revendications 1 à 12 **caractérisé en ce que** la pression à l'intérieur de la cuve de récupération est maintenue entre 1,1 et 3 bar a.

14. Procédé selon l'une quelconque des revendications 1 à 13 **caractérisé en ce que** ladite étape a) est mise en œuvre de façon telle que, lors de l'étape c), le réacteur d'hydrolyse thermique soit rempli entre 70% et 95 % de sa capacité volumique totale.

15. Installation de traitement de boues pour la mise en œuvre du procédé selon l'une quelconque des revendications 1 à 14 **caractérisée en ce qu'**elle comprend :
des moyens d'amenée (1) de boues à traiter non préchauffées à au moins un mélangeur dynamique (3) comprenant une chambre (31) essentiellement cylindrique présentant un volume faible de quelques litres et accueillant des pales (32) montées sur un axe de rotation mu par un rotor tournant à une vitesse supérieure à 500 tr/mn, ledit mélangeur dynamique étant pourvu d'une arrivée (4) de vapeur de récupération ;
un groupe de réacteurs d'hydrolyse thermique (71,72,73,74) reliés audit au moins un mélangeur dynamique (3) et pourvus de moyens (8) d'amenée de vapeur vive, de moyens (10) d'évacuation des gaz incondensables et de moyens d'évacuation de boues hydrolysées vers au moins une cuve de récupération ;
au moins une cuve (13) de récupération reliée auxdits réacteurs d'hydrolyse thermique (71,72,73,74) et pourvue d'une canalisation (14) d'évacuation de vapeur de récupération reliée à ladite arrivée (4) de vapeur de récupération dudit au moins un mélangeur dynamique (3) ;
des moyens (15) d'évacuation des boues hydrolysées.

16. Installation selon la revendication 15 **caractérisée en ce que** ledit groupe de réacteurs d'hydrolyse thermique (71,72,73,74) comprend 2 à 6 réacteurs.

17. Installation selon la revendication 15 ou 16 **caractérisée en ce qu'**elle comprend :
un mélangeur dynamique (3) commun ;
ledit groupe de réacteurs d'hydrolyse thermique (71,72,73,74) ;
des moyens (5; 51,52,53,54; 61,62,63,64) de mise en communication fluidique dudit mélangeur dynamique (3) alternativement avec chacun des réacteurs d'hydrolyse thermique (71,72,73,74) dudit groupe;
une cuve (13) commune de récupération ;
des moyens (11 ;111,112,113,114 ;121,122,123,124) de mise en communication fluidique de ladite cuve (13) commune de récupération alternativement avec chacun desdits réacteurs d'hydrolyse thermique (71,72,73,74) dudit groupe et avec ledit mélangeur dynamique (3) commun.

18. Installation selon l'une des revendications 15 à 17 **caractérisée en ce que** ledit rotor à pales (32) tourne à une vitesse entre 1000 tr/mn et 2000 tr/mn.

19. Installation selon l'une quelconque des revendications 15 à 18 **caractérisée en ce que** lesdits réacteurs d'hydrolyse thermique (71,72,73,74) sont reliés audit au moins un mélangeur dynamique (3) par des canalisations (51,52,53,54) débouchant dans la partie supérieure desdits réacteurs d'hydrolyse thermique (71,72,73,74) .

20. Installation selon l'une quelconque des revendications 15 à 19 **caractérisée en ce que** lesdits moyens (8) d'amenée de vapeur vive dans lesdits réacteurs d'hydrolyse thermique (71,72,73,74) incluent des canalisations (81,82,83,84) débouchant dans la partie inférieure desdits réacteurs d'hydrolyse thermique (71,72,73,74).

## Patentansprüche

1. Verfahren zur thermischen Hydrolyse von Schlämmen, das eine Gruppe von Reaktoren zur thermischen Hydrolyse (71, 72, 73, 74) anwendet, **dadurch gekennzeichnet, dass** es eine Aufeinanderfolge von Zyklen umfasst, wobei jede dieser Aufeinanderfolgen von Zyklen für einen der Reaktoren zur thermischen Hydrolyse (71, 72, 73, 74) bestimmt ist, wobei jeder Zyklus Folgendes umfasst:
- einen Schritt a) des Zuführens einer Charge von nicht vorerhitzten Schlämmen, die behandelt werden sollen, in einen Reaktor zur thermischem Hydrolyse, wobei der Schritt des Zuführens den kontinuierlichen Durchlauf der Schlämme der Charge von Schlämmen in einen dynamischen Mischer (3) umfasst, umfassend eine im Wesentlichen zylindrische Kammer (31), die ein kleines Volumen von einigen Litern aufweist und Blätter (32) aufnimmt, die auf einer Drehachse montiert sind, die von einem Rotor bewegt werden, der sich mit einer Geschwindigkeit von mehr als 500 U/min dreht, wobei der dynamische Mischer mit einem Eintritt (4) von Rückgewinnungsdampf versehen ist, in den Rückgewinnungsdampf injiziert wird, wobei die Zeit der Anwesenheit der Schlämme in der im Wesentlichen zylindrischen Kammer (31) des dynamischen Mischers nur einige Sekunden beträgt;
- einen Schritt b) des Injizierens von frischem Dampf in den Reaktor zur thermischen Hydrolyse, der die Charge von Schlämmen enthält, um die Temperatur und den Druck zu erhöhen, der in diesem herrscht;
- einen Schritt c) des thermischen Hydrolysierens der Charge von Schlämmen in dem Reaktor zur thermischen Hydrolyse;
- einen Schritt d) des Entleerens des Inhalts der Charge von hydrolysierten Schlämmen von dem Reaktor zur thermischen Hydrolyse in einen Rückgewinnungstank (13) und des gleichzeitigen Druckentlastens des Reaktors, der die Emission von Rückgewinnungsdampf von dem Rückgewinnungstank (13) verursacht;
wobei die Zyklusanfänge der Aufeinanderfolgen von Zyklen zeitlich gestaffelt sind, so dass die Schritte a) eines Aufeinanderfolgens von Zyklen gleichzeitig mit den Schritten d) einer anderen Aufeinanderfolge von Zyklen sind, wobei der Rückgewinnungsdampf, der während der Schritte d) eines Aufeinanderfolgens von Zyklen emittiert wurde, den Rückgewinnungsdampf darstellt, der während der Schritte a) einer anderen Aufeinanderfolge von Zyklen injiziert wird.

2. Verfahren nach Anspruch 1, **dadurch gekennzeichnet, dass** die Schlämme, die behandelt werden sollen, eine Trockenheit aufweisen, die zwischen 10 Gew% und 40 Gew% der Trockenmassen liegt.

3. Verfahren nach Anspruch 2, **dadurch gekennzeichnet, dass** die Schlämme, die behandelt werden sollen, eine Trockenheit aufweisen, die zwischen 10 und 35 Gew% der Trockenmassen liegt.

4. Verfahren nach einem der Ansprüche 1 bis 3, **dadurch gekennzeichnet, dass** es eine Ableitung der nicht kondensierbaren Gase aus dem Reaktor zur thermischen Hydrolyse während der Schritte a) oder d) umfasst.

5. Verfahren nach Anspruch 4, **dadurch gekennzeichnet, dass** der Schritt a) durchgeführt wird, indem der Reaktor zur Hydrolyse in Unterdruck gesetzt wird.

6. Verfahren nach einem der Ansprüche 1 bis 5, **dadurch gekennzeichnet, dass** die Dauer von Schritt a) zwischen 5 und 30 min liegt, die Dauer von Schritt b) zwischen 5 und 30 min liegt, die Dauer von Schritt d) zwischen 5 und 30 min liegt und die Dauer von Schritt c) zwischen 5 und 120 min liegt.

7. Verfahren nach Anspruch 6, **dadurch gekennzeichnet, dass** die Dauer von Schritt c) zwischen 5 und 30 min liegt.

8. Verfahren nach einem der Ansprüche 1 bis 7, **dadurch gekennzeichnet, dass** die Dauer jedes Zyklus zwischen 20 min und 210 min liegt.

9. Verfahren nach einem der Ansprüche 1 bis 8, **dadurch gekennzeichnet, dass** während des Schritts c) des thermischen Hydrolysierens die Temperatur der Charge von Schlämmen zwischen 120 ºC und 200 ºC liegt.

10. Verfahren nach Anspruch 9, **dadurch gekennzeichnet, dass** während des Schritts c) des thermischen Hydrolysierens die Temperatur der Charge von Schlämmen zwischen 140 ºC und 180 ºC liegt.

11. Verfahren nach einem der Ansprüche 1 bis 10, **dadurch gekennzeichnet, dass** während des Schritts c) des thermischen Hydrolysierens der Druck im Inneren des Reaktors zur thermischen Hydrolyse zwischen 2 und 16 bar a liegt.

12. Verfahren nach einem der Ansprüche 1 bis 11, **dadurch gekennzeichnet, dass** während des Schritts c) des thermischen Hydrolysierens der Druck im Inneren des Reaktors zur thermischen Hydrolyse zwischen 3,5 und 10 bar a liegt.

13. Verfahren nach einem der Ansprüche 1 bis 12, **dadurch gekennzeichnet, dass** der Druck im Inneren des Rückgewinnungstanks zwischen 1,1 und 3 bar a gehalten wird.

14. Verfahren nach einem der Ansprüche 1 bis 13, **dadurch gekennzeichnet, dass** der Schritt a) derart angewendet wird, dass bei Schritt c) der Reaktor zur thermischen Hydrolyse zwischen 70 % und 95 % seiner gesamten Volumenkapazität gefüllt ist.

15. Anlage zur Behandlung von Schlämmen zur Anwendung des Verfahrens nach einem der Ansprüche 1 bis 14, **dadurch gekennzeichnet, dass** sie Folgendes umfasst:
Mittel zur Zufuhr (1) von nicht vorerhitzten Schlämmen, die behandelt werden sollen, in mindestens einen dynamischen Mischer (3), umfassend eine im Wesentlichen zylindrische Kammer (31), die ein kleines Volumen von einigen Litern aufweist und Blätter (32) aufnimmt, die auf einer Drehachse montiert sind, die von einem Rotor bewegt werden, der sich mit einer Geschwindigkeit von mehr als 500 U/min dreht, wobei der dynamische Mischer mit einem Eintritt (4) von Rückgewinnungsdampf versehen ist;
eine Gruppe von Reaktoren zur thermischen Hydrolyse (71, 72, 73, 74), die mit dem mindestens einen dynamischen Mischer (3) verbunden ist und mit Mitteln (8) zur Zufuhr von frischem Dampf, Mitteln (10) zur Ableitung der nicht kondensierbaren Gase und Mitteln zur Ableitung von hydrolysierten Schlämmen in mindestens einen Rückgewinnungstank versehen ist;
mindestens einen Rückgewinnungstank (13), der mit den Reaktoren zur thermischen Hydrolyse (71, 72, 73, 74) verbunden und mit einem Kanal (14) zur Ableitung von Rückgewinnungsdampf versehen ist, der mit dem Eintritt (4) von Rückgewinnungsdampf von dem mindestens einen dynamischen Mischer (3) verbunden ist;
Mittel (15) zur Ableitung der hydrolysierten Schlämme.

16. Anlage nach Anspruch 15, **dadurch gekennzeichnet, dass** die Gruppe von Reaktoren zur thermischen Hydrolyse (71, 72, 73, 74) 2 bis 6 Reaktoren umfasst.

17. Anlage nach Anspruch 15 oder 16, **dadurch gekennzeichnet, dass** sie Folgendes umfasst:
einen gemeinsamen dynamischen Mischer (3);
die Gruppe von Reaktoren zur thermischen Hydrolyse (71, 72, 73, 74);
Mittel (5; 51, 52 ,53, 54; 61, 62, 63, 64) zur fluidischen Kommunikation des dynamischen Mischers (3) alternativ mit jedem der Reaktoren zur thermischen Hydrolyse (71, 72, 73, 74) der Gruppe;
einen gemeinsamen Rückgewinnungstank (13);
Mittel (11; 111, 112, 113, 114; 121, 122, 123, 124) zur fluidischen Kommunikation des gemeinsamen Rückgewinnungstanks (13) alternativ mit jedem der Reaktoren zur thermischen Hydrolyse (71, 72, 73, 74) der Gruppe und mit dem gemeinsamen dynamischen Mischer (3).

18. Anlage nach einem der Ansprüche 15 bis 17, **dadurch gekennzeichnet, dass** sich der Rotor mit Blättern (32) mit einer Geschwindigkeit zwischen 1000 U/min und 2000 U/min dreht.

19. Anlage nach einem der Ansprüche 15 bis 18, **dadurch gekennzeichnet, dass** die Reaktoren zur thermischen Hydrolyse (71, 72, 73, 74) mit dem mindestens einen dynamischen Mischer (3) durch Kanäle (51, 52, 53, 54) verbunden sind, die in den oberen Teil der Reaktoren zur thermischen Hydrolyse (71, 72, 73, 74) münden.

20. Anlage nach einem der Ansprüche 15 bis 19, **dadurch gekennzeichnet, dass** die Mittel (8) zur Zufuhr von frischem Dampf in die Reaktoren zur thermischen Hydrolyse (71, 72, 73, 74) Kanäle (81, 82, 83, 84) umfassen, die in den unteren Teil der Reaktoren zur thermischen Hydrolyse (71, 72, 73, 74) münden.

## Claims

1. Method of thermal hydrolysis of sludges implementing a group of thermal hydrolysis reactors (71,72,73,74) **characterized in that** it comprises successions of cycles, each of these successions of cycles being dedicated to one of said thermal hydrolysis reactors (71,72,73,74), each cycle comprising:
- a step a) for conveying a batch of non-preheated sludges to be treated into a thermal hydrolysis reactor, said step for conveying comprising the continuous passage of the sludges of said batch of sludges into a dynamic mixer (3) comprising an essentially cylindrical chamber (31) having a small volume of a few liters and receiving blades (32) mounted on a rotation shaft driven by a rotor rotating at a speed of over 500 rpm, said dynamic mixer being provided with an inlet (4) of recovery steam into which recovery steam is injected, the residence time of the sludges in said essentially cylindrical chamber (31) being only a few seconds;
- a step b) for injecting live steam into said thermal hydrolysis reactor containing said batch of sludges so as to increase the temperature and the pressure prevailing in this reactor;
- a step c) of thermal hydrolysis of said batch of sludges in said thermal hydrolysis reactor;
- a step d) for emptying the content of said batch of hydrolyzed sludges of said thermal hydrolysis reactor towards a recovery vessel (13) and for concomitantly de-pressurizing said reactor prompting the emission of recovery steam from said recovery vessel (13);
the cycle starting points of the successions of cycles being staggered in time so that the steps a) of a succession of cycles are concomitant with the steps d) of another succession of cycles, the recovery steam emitted during the steps d) of a succession of cycles constituting the recovery steam injected during the steps a) of another succession of cycles.

2. Method according to claim 1 **characterized in that** said sludges to be treated have a dryness of 10% to 40% by weight of dry matter.

3. Method according to claim 2 **characterized in that** said sludges to be treated have a dryness of 10% to 35% by weight of dry matter.

4. Method according to any one of the claims 1 to 3 **characterized in that** it comprises a discharging of non-condensable gases from said thermal hydrolysis reactor during said steps a) and d).

5. Method according to claim 4 **characterized in that** the step a) is implemented by placing said hydrolysis reactor under low pressure.

6. Method according to any one of the claims 1 to 5 **characterized in that** the duration of the step a) is from 5 to 30 min, the duration of the step b) is from 5 to 30 min, the duration of the step d) is from 5 to 30 min, and the duration of the step c) is from 5 to 120 min.

7. Method according to claim 6 **characterized in that** the duration of the step c) is from 5 to 30 min.

8. Method according to any of the claims 1 to 7 **characterized in that** the duration of each cycle is from 20 min to 210 min.

9. Method according to any one of the claims 1 to 8 **characterized in that**, during the step c) of thermal hydrolysis, the temperature of said batch of sludges is from 120°C to 200°C.

10. Method according to claim 9 **characterized in that**, during said step c) of thermal hydrolysis, the temperature of said batch of sludges is from 140 °C to 180 °C.

11. Method according to any one of the claims 1 to 10 **characterized in that**, during the step c) of thermal hydrolysis, the pressure inside the thermal hydrolysis reactor is from 2 to 16 bar(a).

12. Method according to any one of the claims 1 to 11 **characterized in that** during the step c) of thermal hydrolysis, the pressure inside the thermal hydrolysis reactor is from 3,5 to 10 bar(a).

13. Method according to any one of the claims 1 to 12 **characterized in that** the pressure inside the recovery vessel is maintained at 1.1 to 3 bar(a).

14. Method according to any one of the claims 1 to 13 **characterized in that** said step a) is implemented in such a way that, during the step c), the thermal hydrolysis reactor is filled to between 70% and 95% of its total capacity by volume.

15. Plant for treating sludges to implement the method according to any one of the claims 1 to 14 **characterized in that** it comprises:
means (1) for conveying non-preheated sludges to be treated to at least one dynamic mixer (3) comprising an essentially cylindrical chamber (31) having a small volume of a few liters and receiving blades (32) mounted on a rotation shaft driven by a rotor rotating at a speed of over 500 rpm, said dynamic mixer being provided with an inlet (4) of recovery steam;
a group of thermal hydrolysis reactors (71,72,73,74) connected to said at least one dynamic mixer (3) and provided with means (8) for conveying live steam, means (10) for discharging non-condensable gases and means for discharging hydrolyzed sludge towards at least one recovery vessel;
at least one recovery vessel (13) connected to said thermal hydrolysis reactors (71,72,73,74) and provided with a pipe (14) for discharging recovery steam connected to said inlet (4) of recovery steam of said at least one dynamic mixer (3);
means (15) for discharging hydrolyzed sludges.

16. Plant according to claim 15 **characterized in that** said group of thermal hydrolysis reactors (71,72,73,74) comprises 2 to 6 reactors.

17. Plant according to claim 15 or 16 **characterized in that** it comprises:
a common dynamic mixer (3);
said group of thermal hydrolysis reactors (71,72,73,74) ;
means (5; 51,52,53,54; 61,62,63,64) for setting up fluidic communication of said dynamic mixer in alternation with each of the thermal hydrolysis reactors (71,72,73,74) of said group;
a common recovery vessel (13);
means (11;111,112,113,114;121,122,123,124) for setting up fluidic communication of said common recovery vessel (13) alternatively with each of said thermal hydrolysis reactors (71,72,73,74) of said group and with said common dynamic mixer (3).

18. Plant according to anyone of claims 15 to 17 **characterized in that** said blade rotor (32) rotates at a speed erably from 1000 rpm to 2000 rpm.

19. Plant according to any one of the claims 15 to 18 **characterized in that** said thermal hydrolysis reactors (71,72,73,74) are connected to said at least one dynamic mixer (3) by pipes (51,52,53,54) leading into the upper part of said thermal hydrolysis reactors (71,72,73,74) .

20. Plant according to any one of the claims 15 to 19 **characterized in that** said means (8) for conveying live steam into said thermal hydrolysis reactors (71,72,73,74) include pipes (81,82,83,84) opening into the lower part of said thermal hydrolysis reactors (71,72,73,74).
